# EUROPEAN PATENT SPECIFICATION

(11) **EP 3 029 685 B1**
(45) Date of publication and mention of the grant of the patent: **29.04.2020**
(21) Application number: 14832475.9
(22) Date of filing: 19.03.2014
(51) Int. Cl.: G21F 9/36, G21F 9/30, G21F 9/34

(54) **METHOD FOR LONG-TERM STORAGE OF WASTE NUCLEAR FUEL**
VERFAHREN ZUR DAUERHAFTEN LAGERUNG VON KERNBRENNSTOFFABFÄLLEN
PROCÉDÉ DE STOCKAGE À LONGUE DURÉE DE COMBUSTIBLE NUCLÉAIRE USÉ

(30) Priority: 31.07.2013 RU 2013135672
(43) Date of publication of application: 08.06.2016
(73) Proprietor: Joint Stock Company "Akme-Engineering", Moscow 115035 (RU)
(72) Inventor: TOSHINSKY, Georgiy Ilich, Kaluzhskaya obl 249033 (RU)
(74) Representative: Mitev, Mitko Karushkov
(86) International application number: PCT/RU2014/000169
(87) International publication number: WO 2015/016741

(56) References cited:
- EP-A1- 0 091 175
- WO-A1-2008/125803
- GB-A- 1 196 269
- GB-A- 1 446 016
- RU-A- 97 100 888
- RU-C1- 2 231 837
- RU-U1- 122 200
- SU-A1- 1 350 663

## Description

### Engineering range designed to apply this invention

This invention refers to the nuclear engineering precisely to the long-term safe storage procedure of the waste nuclear fuel by the nuclear reactors.

### Previous similar engineering level

The long-term (decades) safe storage of the waste nuclear fuel (WNF), mostly, the waste nuclear reactor fuel assembly (WNRFA) is considered as the highly-complicated engineering problem. It is related to the fact that the high radiation potential is accumulated in the WNRFA specified by the radiation of the fusion products containing in the WNF, as well radiation of the secondary nuclear fuel (plutonium) and minor actinides (neptunium, americium, curium) generated during the nuclear reactor operation (NR) and radiated by the primary nuclear fuel neutrons.

The damage of the basic safety barrier, fuel cell jacket by the corrosive, heat and mechanical exposure can result in the radioactivity release and serious radioecological issues.

The set target is complicated with the fact the WNF is the constant source of the residual energy release decreasing gradually but even after the years pass it will require the controlled heat release and if it is broken then the temperature of the WNF will be increased and lead to the unsealing of the fuel cell jacket.

Currently the accepted method of the WNF long-term storage is the disposal of the WNRFA in the cooling ponds filled with water allocating the residual energy release of WNRFA. Since the water in the pond can be radioactive it will be cooled by the heat exchanger from the outer cooling water source.

There are known storage methods of the waste nuclear fuel in the cooling ponds.

For example, there are storage methods of the waste nuclear fuel by allocating it in the pond with the desalinated water, canisters punched at the top, as well, filled with the desalinated water. The water level of the pond and canisters are maintained below the holes edges by gradual injection of the desalted water from the self-contained tank to the canisters and pond. Moreover, it is suggested to inject water gradually to the canisters once the maximum allowable level in the control canisters with the maximum residual energy release level is achieved (Patent RU 2403633, G21C19/06, G21F9/36, 2010).

There are storage methods of the radioactive materials including: a) water immersion of the container designed with the upper, bottom parts and cavity to be filled with water; b) allocation of the nuclear material inside the container immersed in water; c) lifting up of the immersed container until its upper part gets over the pond surface level, and the container basic part is kept below the pond surface level; and d) water removal from the container cavity while the container upper part is kept above the pond level, and the remaining part is immersed in water (application of the USA for the invention US2009069621, G21F5/005,2009).

There is a method practiced in the waste nuclear fuel storages, atomic power stations and waste nuclear fuel recycling plants. To maintain the long-term storage in the canisters filled with water allocated in the water pond fixed by the girder flooring with the brackets; the canisters supports are installed on the pond bottom, the upper face of the canister is placed underneath the girder flooring with 100÷150mm gap at the canister density 30÷50 canisters per square meters of the pond bottom (Patent RU 2407083, G21C19/22, 2010).

As the practices show the application of this WNF storage method leads to the unsealing of the container or canister with the waste nuclear fuel in the cooling pond caused by the corrosion process and the water radioactive contamination.

To eliminate this process, the dry storage of WNRFA has been practicing: when WNRFA are took out from the pond after keeping in the cooling pond (around three years) and decreasing the energy release, then placed in the sealed canisters to be located afterwards in the "dry" storage facility with air cooling.

It is known that Fukushima Daiichi Nuclear break-down and failure in the power supply of the pond water cooling system lead to the water vaporization, fuel cell jackets overheating, their shells destruction with hydrogen accumulation created by the zirconium-steam reaction, and radiation release into the atmosphere.

Taking into account this fact it is seemed up-to-date the usage of the WNF "dry" storage, excluding the storage by means of the cooling ponds.

The WNF dry storage methods are described in the US 6802671, DE 3816195, US 5887042, US8098790.

As well, there are shipping and/or storage procedures of the nuclear materials when the nuclear materials are placed in the cast lead radiation-resistant container located above the steel frame (Application USA US2010183110, G21F5/008, 2010).

This invention allows for the availability, at least, one radiation control level consisting from one steel frame directed longwise and enforced with the case of lead or any of lead alloys, casted above the steel frame and, the steel frame is fitted with at least of one bracket to fix the lead-casted case and eliminate its displacement longwise. Moreover, the abovementioned steel frame is built in the case casted from lead (or any of lead alloys), least, partly longwise, preferably - lengthwise. Eventually, it creates the solid mechanical connection of the steel frame to the lead case (or any of lead alloys) and exclude the relative displacement of these two parts longwise at the free fall of the package.

There exists the storage mode when the waste nuclear fuel is kept in the convection-cooling container but the box with the used fuel is placed in the steel vessel with the sealed lids, the vessel has the heat-transmitting side and end stiffeners which are designed as the damping and support elements. The vessel is installed in the container enclosure leaving the gap for the air output; the vessel stiffeners are joined to the container bottom and internal side surface. The container enclosure is made of external and internal steel jackets filled in between with the radiation-resistant material suchlike fire-proof concrete and/or neutron-absorption compounds. The reinforcing heat-transmitting elements are installed between the jackets tangentially to the internal jacket and have the shape of the steel punched plates welded to the internal jacket and tightly adjacent to the external jacket. At the bottom part of the enclosure the intake cooling ducts are attached. In case of the vessel depressurized, the cooling ducts are closed with the blinds (Patent RU2231837, G21F5/008, 2004).

The drawback of the engineering solution is the possibility of the radioactive emission into the environment in case of the steel vessel depressurization containing the box with the waste nuclear fuel.

The similar option of the stated invention is the WNF "dry" storage used for the nuclear submarine (NS) when straight after the off-load the extracted used sliding part (USP) containing the active ONF is placed temporally in one of the pre-cooling storage cell in the steel sealed bin where before the liquefied melt lead-bismuthate eutectic contained and preliminary heated higher the fusion temperature. The sealed lid is fitted to the top of the bin. Upon the heating system shut-off, dropping off the residual heat-inputs and eutectic curing the bin with USP is placed in the long-term cooling storage cell for further storing within 3-5 years and more (Zrodnikov A.V. and others, Problems and approaches to dispose the waste nuclear fuel of the nuclear submarine metal-cooled reactor. Proceedings of the Higher Educational Establishments "Nuclear power" - Ministry of education and science of the Russian Federation", Obninsk: #1, 2007, p.16).

The drawback of the similar option is the very limited application range - only for the fully discharged NS reactor core within the USP having very low capacity level of the residual heat input at the time of offloading. It is specified by two reasons: 1) the NS reactors are operated basically at the low capacity levels; 2) fuel loading relates to the NS plant repair therefore the offloading is carried out after the sufficient time passes from the reactor shut-off.

This WNF storage and offloading method is not applicable for the civil nuclear plant reactors because of the high capacity level of the residual energy output caused by mainly by the reactor driving at the rated capacity and short cooling time lapse before the WNF offloaded. Under the same reason it is not applicable to use eutectic lead-bismuthate alloy as the heat-transmitting medium having the low fusion temperature (123.5°C), because this heat-transmitting medium will be liquefied for a long time but not function as the extra safety barrier.

Beyond this storage method does not allow offloading of the WNF to the recycling plant following to the applicable regulation documentation. The time-consuming dismantle of the reactor core is required that is itself the highly nuclear and radioactive hazard.

### Invention description

The invention is designed to increase the long-term storage security of the waste nuclear fuel while storing the waste nuclear reactor fuel assembly in the storing facility cooled by the ambient air, preferably, with the natural air circulation.

The set target is solved by maintaining the multibarrier protection from the radiation discharge into the environment. The multibarrier protection is built in by heating the WNRFA steel canister filled with the material of sufficiently high fusion temperature, chemical resistance to the fuel cell jackets of WNRFA, canister enclosure, air and water until it is melted, the WNRFA is allocated in the heated sealed steel canister where the above-mentioned material is in liquefied state. After the canister is taken out of the heating unit it shall be placed in the WNF "dry" storage facility cooled by ambient air. Once the material is cured that is chemically resistant to the fuel cell jacket material, canister case material, air and water, the multibarrier protection from the radiation discharge into the environment is created providing the continuous, secured and safe WNRFA storage. Further the canister can be placed in the "dry" storage cell cooled with the ambient air of the natural circulation, or the convectional - cooling container fabricated following to the patent, for example, close to the analog RU 2231837 allowing the shipping of the WNRFA to the WNF recycling plant.

Considering the selection of the canister filling material with the sufficiently high heat-transmitting value, the maximum allowable temperature of WNRFA fuel cell jackets is not increased even under the natural air circulation providing the inactive heat output within unlimited period of time.

### Invention application

The long-term safe WNF storage is performed as described below.

Prior the offloading of the WNRFA from the nuclear reactor to the heating unit it is required to install the steel stiffened canister preliminary filled with the chemically resistant material in the amount sufficient in relation to the fuel cell jackets materials, canister enclosure, air and water as well obtaining the applicable fusion temperature and heat-transmitting value, for example, lead.

The lead is liquefied under the heat generated by the heating unit (fusion temperature 327°C).

By using the proper devices, the WNRFA is taken out of the nuclear reactor and placed in the canister so the fueling section of the fuel cell jackets is below the liquefied lead level in the canister and fixed in this position with the mechanical devices available on the canister and/or in the WNRFA grating.

Further the sealed canister is taken out of the heating unit and installed in the proper cell of the "dry" storage facility, cooled with the ambient air of natural circulation. The material filling the WNRFA is cured creating the multibarrier protection - each fuel cell jacket of WNRFA separately is lead-covered as well entire WNRFA perimeter-wise is embraced with the lead located between it and steel canister internal wall.

Afterwards the protective plug is installed in the storage cell hole, and the above-mentioned process shall be repeated.

## Claims

1. A method for the long-term storage of the waste nuclear fuel of the nuclear reactor comprising the allocation of the waste nuclear reactor fuel assembly (WNRFA) in the steel canister and sealing with the lid **characterized by** the preliminary filling of the canister with the material chemically resistant to the fuel element jackets of WNRFA, canister material, air and water, then putting the canister in the heating unit, heating the canister filled with material until it liquefies afterwards the WNRFA is taken out of the nuclear reactor is placed in the canister so the fueling section of WNRFA is below the liquefied material level in the canister, the WNRFA is fixed in this position, sealed with the liquified material, afterwards the sealed steel canister is removed from the heating unit and placed in the storage cooled with the ambient air.

2. The method described in claim 1 **characterized by** selecting of lead as the material chemically resistant to the fuel element jacket, canister enclosure material, air and water.

3. The method described in claim 1 **characterized by** selecting a storage facility cooled by the ambient air, having cells for placing the steel canisters with the used fuel assemblies, protective plugs per each cell closing the storage after it is filled while the cooling of the steel canisters in the storage is carried out at the natural circulation of ambient air.

## Patentansprüche

1. Ein Verfahren für die Langzeitlagerung von Kernbrennstoffabfällen des Kernreaktors, das die Zuteilung des Kernbrennstoffabfallelements (WNRFA) im Stahlbehälter und die Abdichtung mit dem Deckel umfasst, das sich durch die vorläufige Befüllung des Kanisters mit dem Material charakterisiert, das gegen die Brennelementmäntel von WNRFA, Kanistermaterial, Luft und Wasser chemisch beständig ist, dann wird der Kanister in die Heizeinheit gestellt, den mit Material gefüllten Kanister wird erhitzt, bis er sich verflüssigt, danach wird die WNRFA aus dem Kernreaktor genommen und in den Kanister gegeben, damit der Betankungsteil von WNRFA unter dem Niveau des Flüssigmaterials im Kanister liegt, die WNRFA wird in dieser Position fixiert, mit dem verflüssigten Material versiegelt, anschließend wird der versiegelte Stahlbehälter von der Heizeinheit entfernt und in den Speicher gestellt, der durch Außenluft gekühlt wurde.

2. Das in Anspruch 1 beschriebene Verfahren, **dadurch gekennzeichnet, dass** sich durch die Auswahl von Blei als ein Material, das chemisch beständig gegen den Brennelementmantel, das Material des Kanistergehäuses, Luft und Wasser ist.

3. Das in Anspruch 1 beschriebene Verfahren, **dadurch gekennzeichnet, dass** durch die Auswahl eines durch die Außenluft gekühlten Speichers mit Zellen zur Montage der Stahlkanister mit den verwendeten Brennelementen, Schutzstopfen pro Zelle, die den Speicher schließen, nachdem er während des Abkühlens der Stahlkanister bei der Lagerung gefüllt wurde, erfolgt die natürliche Umwälzung der Außenluft.

## Revendications

1. Un procédé de stockage de longue durée des déchets de combustible nucléaire provenant du réacteur nucléaire, comprenant
la répartition de l'assemblage de combustible usé de réacteur nucléaire (WNRFA - assemblage combustible) dans la boîte en acier et la fermeture hermétique au moyen du couvercle, **caractérisé**
**par** le remplissage préalable de la boîte avec les matériaux chimiquement résistants
aux gaines à combustibles de l'assemblage combustible, le matériau de la boîte, l'air et l'eau, puis la pose de la boîte à l'intérieur de l'unité chauffante, le chauffage de la boîte remplie des matériaux jusqu'à leur liquéfaction, ensuite l'assemblage combustible est
retiré du réacteur nucléaire, est placé dans la boîte de façon que la section de chargement de l'assemblage combustible est au-dessous du niveau du matériau liquéfié dans la boîte, l'assemblage combustible est fixé dans cette position, fermé de manière hermétique avec le matériau liquéfié, ensuite la boîte en acier hermétiquement fermée est retirée de
l'unité chauffante et placée dans le dispositif de stockage refroidi par l'air ambiant.

2. Le procédé décrit dans la revendication 1 est **caractérisé par** le choix du plomb comme matériau
chimiquement résistant aux gaines à combustibles, le matériau de la boîte, l'air et l'eau.

3. Le procédé décrit dans la revendication 1 est **caractérisé par** le choix d'un dispositif de stockage qui est refroidi
par l'air ambiant, avec des cellules pour y placer les boîtes en acier contenant les assemblages de combustible usé, des bouchons de protection sur chacune des cellules pour refermer le dispositif de stockage après qu'il a été rempli, tandis que le refroidissement des boîtes en acier dans le dispositif de stockage est effectué grâce à la circulation naturelle de l'air ambiant.
